# EUROPÄISCHE PATENTSCHRIFT

(11) **EP 0 504 755 B1**
(45) Veröffentlichungstag und Bekanntmachung des Hinweises auf die Patenterteilung: **08.05.1996**
(21) Anmeldenummer: 92104365.9
(22) Anmeldetag: 13.03.1992
(51) Int. Cl.: G01B 11/02, G01B 11/00, G01B 11/12

(54) **Verfahren und Einrichtung zur Detektion von Kanten und Bohrungen mit einem optischen Tastkopf**
Method and arrangement to detect edges and bores with an optical sensing head
Méthode et arrangement pour détecter des bords et des alésages avec une tête de palpage optique

(30) Priorität: 22.03.1991 DE 4109483
(43) Veröffentlichungstag der Anmeldung: 23.09.1992
(73) Patentinhaber: Firma Carl Zeiss, D-73446 Oberkochen (DE); CARL-ZEISS-STIFTUNG, HANDELND ALS CARL ZEISS, D-73446 Oberkochen (DE)
(72) Erfinder: Koch, Klaus-P., Dr., W-7080 Aalen (DE); Peter, Ralf, W-7080 Aalen (DE)

(56) Entgegenhaltungen:
- EP-A- 0 125 165
- EP-A- 0 368 032
- FR-A- 2 597 018
- US-A- 4 934 810
- PATENT ABSTRACTS OF JAPAN vol. 14, no. 279 (P-1062) 15. Juni 1990 ; & JP-A-20 82 105

## Beschreibung

Bei der Vermessung von Fahrzeugkarosserien mit Hilfe von Koordinatenmeßgeräten werden zur Messung der Lage von Kanten und Bohrungen, Spaltbreiten und dergleichen vornehmlich schaltende mechanische Tastköpfe benutzt. Hingegen werden für die Vermessung der Oberflächenkontur solcher Werkstücke vielfach auch optisch messende Tastköpfe, beispielsweise sogenannte Triangulationstaster eingesetzt wie sie in der US-PS 4 934 810 beschrieben sind. Diese Taster liefern ein dem Abstand des Tasters von der Werkstückoberfläche proportionales Meßsignal. Entsprechend sind dann, wenn die Karosserie vollständig vermessen werden soll, zeitaufwendige Tasterwechseloperationen notwendig, wobei der am Meßarm des Koordinatenmeßgerätes befestigte mechanische Tastkopf gegen einen optischen Tastkopf ausgewechselt wird und umgekehrt.

Daneben sind auch rein optische Karosserie-Meßverfahren bekannt. Hier werden größere Bereiche des Werkstückes abgebildet und das Werkstückbild mit den Methoden der Bildverarbeitung ausgewertet. Diese Auswerteverfahren sind jedoch sehr aufwendig und bieten nur eine begrenzte Genauigkeit der Koordinatenmessung. Außerdem ist hierfür ein zweidimensionaler Bildsensor erforderlich.

In der EP 0 368 032 ist ein Verfahren zur Messung der Fläche bzw. des Durchmessers von Bohrungen mit Hilfe eines Laserstrahls bekannt, der die Bohrungen abrastert und ein Grauwertbild der Bohrung liefert. Zur koordinatenmäßigen Vermessung von Konturen bzw. des Abstands zur Bohrung ist das Verfahren nicht geeignet.

Schließlich ist es auch bekannt, Karosserien mit einem speziellen optischen Tastkopf zu vermessen, der ein aufgefächertes Lichtbündel aussendet und die Koordinatenwerte der Werkstückoberfläche einschließlich etwaiger Kanten und Bohrungen nach dem Lichtschnittverfahren gewinnt. Ein solcher optischer Tastkopf ist beispielsweise unter dem Namen "Perceptron-Contour-Sensor" bekannt und in der Firmenschrift "MV-300 Machine Vision" der Firma Perceptron auf Seite 11 beschrieben. Auch dieser optische Tastkopf verwendet einen zweidimensionalen Bildsensor, um die Form des Lichtschnittes auf Löcher bzw. Kanten auswerten zu können. Außerdem ist für den Betrieb dieses Sensors eine weitere Drehachse in Laserstrahlrichtung erforderlich, damit der emittierte Lichtfächer senkrecht zu der zu vermessenden Kante eingestellt werden kann. Wenn an dieser Stelle vor einer weiteren bzw. zusätzlichen Drehachse die Rede ist, dann ist zu berücksichtigen, daß optische Tastköpfe am Meßarm des Koordinatenmeßgerätes häufig mittels einer sogenannten Dreh-Schwenk-Einheit befestigt sind, damit auch raumschräge Werkstückmerkmale einfach gemessen werden können. Diese Dreh-Schwenkeinheit macht mit seinen zwei rotatorischen Achsen das Koordinatenmeßgerät zu einem Fünf-Achsen-Gerät. Für das Ausrichten eines Lichtschnittes zu einer Kante am Werkstück wäre aber noch eine weitere, d.h. die sechste Achse erforderlich.

Eine Weiterbildung des vorgenannten Tasters ist aus der US-PS 48 22 163 bekannt. Der Lichtschnitt des dort beschriebenen Tasters ist keilförmig, erstreckt sich also in mehrere Richtungen, wodurch die Notwendigkeit entfällt, den Taster um die sechste Achse drehen zu müssen.

Aber auch der letztgenannte Taster benötigt einen zweidimensionalen Bildsensor und eine relativ aufwendige Bildverarbeitungselektronik.

Es ist die Aufgabe der vorliegenden Erfindung ein Verfahren anzugeben, mit dem unter Verwendung eines möglichst einfachen optischen Tastkopfes nicht allein Konturen von Werkstückoberflächen, sondern auch die Lage von Kanten und Bohrungen am Werkstück einfach, schnell und möglichst genau gemessen werden können.

Diese Aufgabe wird gemäß den im Anspruch 1 angegebenen Merkmalen gelöst mit einem Verfahren zur Detektion von Kanten und Bohrungen mit einem optischen Tastkopf, der ein Strahlbündel aussendet und ein aus der Lage bzw. der Form des auf einem Werkstück entstehenden Strahlungsfleckes abgeleitetes, dem Abstand zum Werkstück entsprechendes Signal liefert, wobei
- der Tastkopf (4) am Meßarm eines Koordinatenmeßgerätes befestigt ist und von diesem eintlang eines vorgebbaren Weges (s) über die Oberfläche des zu vermessenden Werkstückes geführt wird,
- die Koordinaten (X, Y, Z) der abgetasteten Werkstückoberfläche aus den Abstandsmeßwerten (Z') des optischen Tastkopfs und den Wegsignalen (X₀, Y₀, Z₀) des Koordinatenmeßgerätes ermittelt und gespeichert werden,
- zusätzlich die Intensität (I) der vom Werkstück rückgesteuerten und vom Tastkopf empfangenen Strahlung für die Koordinaten (X, Y, Z) ermittelt oder durch Regelung der Intensität der vom Tastkopf (4) emittierten Strahlung konstant gehalten wird,
- der Verlauf der Intensitätswerte (I) der empfangenen bzw. der im Falle der Regelung emittierten Strahlung gespeichert und über die gemessenen Koordinaten (X, Y, Z) in einem Rechner ausgewertet wird derart, daß die Lagekoordinaten (X_{K}, Y_{K}, Z_{K}) von Kanten bzw. Bohrungen aus sprunghaften Änderungen der Intensitätswerte (I) bestimmt werden.

Zur Durchführung des erfindungsgemäßen Verfahrens wird lediglich ein einfacher Tastkopf benötigt, der einen punktförmigen Strahlungsfleck auf das zu vermessende Werkstück projiziert. Solche Tastköpfe, die entweder nach dem Autofokusprinzip oder dem Triangulationsprinzip arbeiten und entweder mit einer Differenzphotodiode bzw. einem Quadrantendetektor, oder einer Lateraleffektphotodiode bzw. einer Detektorzeile als photosensitivem Empfänger ausgerüstet sind, sind relativ preiswert und auch die für die Auswertung des Empfängersignals benötigte Elektronik erfordert keinen hohen Aufwand.

Eine zusätzliche (sechste) Drehachse zur Ausrichtung des optischen Tastkopfs ist ebenfalls nicht erforderlich, vielmehr kann der Strahlungspunkt, den der Tastkopf emittiert, in einer beliebigen Bahn von dem Koordinatenmeßgerät, an dem der optische Tastkopf montiert ist, über das Werkstück geführt werden.

Gegenüber dem bisher mit derartigen Tastköpfen durchgeführten Meßverfahren ist es lediglich erforderlich, zusätzlich zu dem Abstandssignal noch ein Intensitätssignal zu gewinnen, das die Intensität z.B. des vom Objekt bzw. Werkstück rückgestreuten Lichtes beschreibt, und dieses Signal zusammen mit den Koordinatenmeßwerten im Speicher des ohnehin vorhandenen Rechners abzulegen. Somit können ohne großen Zusatzaufwand mit ein und demselben optischen Tastkopf sowohl Konturen als auch Unstetigkeiten wie Löcher und Bohrungen bzw. Kanten am Werkstück gemessen werden und das bisher übliche Einwechseln eines zweiten mechanischen Tasters für die letztgenannte Meßaufgabe entfällt.

Während bei der Konturvermessung von Werkstücken oft die Intensität der vom optischen Tastkopf emittierten Strahlung geregelt wird, um diese an unterschiedliche Streueigenschaften der Werkstückoberfläche anzupassen und einen konstanten Pegel auf dem Empfänger im Tastkopf zu erzielen, ist es zweckmäßig, in der Betriebsweise "Messen von Kanten/Bohrungen" die Intensität der vom Tastkopf emittierten Strahlung konstant zu halten, da ja die von der Kante bzw. der Bohrung stark gestörte Rückstreueigenschaft des Werkstückes als Kriterium für die Bestimmung der Koordinaten der Bohrung herangezogen wird. Man geht deshalb zweckmäßig so vor, daß man die integrale Intensität des vom Tastkopf empfangenen Lichten in Abhängigkeit von der Position der abgescannten Objektoberfläche bzw. Werkstückoberfläche abspeichert und aus sprunghaften Änderungen der Intensitätswerte die Lagekoordinaten der Kante bzw. Bohrung bestimmt. Das Abspeichern der integralen Streulichtverteilung hat gegenüber einer Peak-Detektion der Streulichtverteilung einen wesentlich stabileren, d.h. rauschärmeren Signalverlauf zur Folge.

Auch für das Abstandssignal des optischen Tastkopfes bzw. die daraus gewonnenen Koordinatenwerte ist es zweckmäßig, sie zumindest im Bereich der Kanten und Bohrungen durch Glätten bzw. Interpolieren über die Bohrungen/Kanten hinweg zu gewinnen. Denn auf diese Weise können die Koordinatenwerte auch im Bereich der Bohrungskante generiert werden und die dort vorliegenden Intensitätswerte, die der optische Tastkopf "sieht", zugeordnet werden.

Weitere Vorteile der Erfindung ergeben sich aus der nachfolgenden Beschreibung eines Ausführungsbeispiels anhand der Figuren 1-5 der beigefügten Zeichnungen. Hiervon ist
- Figur 1: eine perspektivische vereinfachte Darstellung eines Koordinatenmeßgerätes mit angesetztem optischen Tastkopf während einer typischen Meßaufgabe;
- Figur 2: ist eine vereinfachte Skizze, die den in dem Tastkopf (4) nach Figur 1 verwendeten Sensor zeigt;
- Figur 3: ist ein Diagramm, in dem die Intensitätsverteilung des auf dem Sensor (8) aus Figur 2 abgebildeten Strahlungsflecks in Sensorrichtung aufgetragen ist;
- Figur 4: ist ein Diagramm, in dem die Abstandsmeßwerte des optischen Tastkopfs (4) aus Figur 1 gegen den Abtastweg über eine Bohrung hinweg dargestellt sind;
- Figur 5: ist ein Diagramm, in dem die Intensitätswerte des rückgestreuten Lichtes gegen die Koordinaten des Abtastweges aufgetragen sind;
- Figur 6: ist ein Blockschaltbild der wesentlichen Komponenten der Einrichtung zur Durchführung des erfindungsgemäßen Verfahrens.

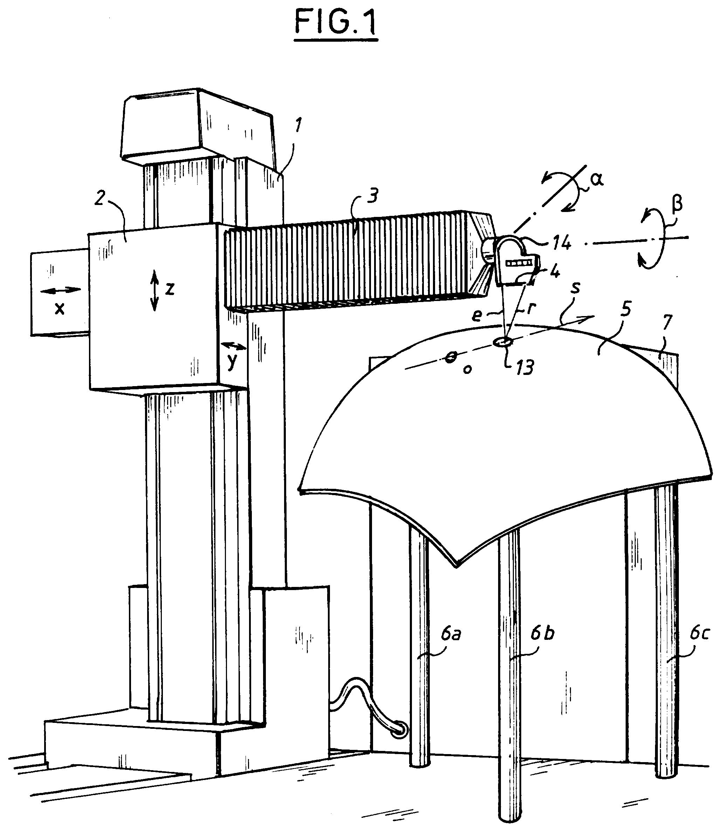

Das in Figur 1 dargestellte Koordinatenmeßgerät in Ständerbauweise besitzt eine waagerecht in Richtung des Pfeils (Y) verfahrbare Säule (1), an der über einen in Richtung des Pfeils (Z) d.h. vertikal verfahrbaren Schlitten (2) der Meßarm (3) des Gerätes gehalten ist. Der Meßarm (3) selbst ist waagerecht in der zweiten Koordinate (X) verschiebbar und trägt an seinem vorderen Ende einen optischen Tastkopf (4), der nach dem Triangulationsprinzip arbeitet. Bei dem Tastkopf kann es sich beispielsweise um den in der US-PS 49 34 810 beschriebenen Tastkopf handeln. Der Tastkopf ist an dem Meßarm (3) über eine Dreh-Schwenk-Einheit (14) befestigt, mit deren Hilfe der Tastkopf (4) um die beiden mit (α) und (β) bezeichneten Achsen gedreht bzw. geschwenkt werden kann.

Mit (7) ist der Steuerrechner des Koordinatenmeßgerät bezeichnet. Im Meßbereich des Gerätes ist über drei Halterungen (6a, 6b, 6c) das zu vermessende Werkstück (5), beispielsweise ein Karosserieteil gehalten.

Zur Formprüfung des Werkstücks (5) wird dessen Oberfläche in bekannter Weise abgetastet, indem die Werkstückoberfläche in einer vorgegebenen Bahn abgefahren und die Höhenkoordinate (Z₀), d.h. die vertikale Lage des Meßarms (3) so nachgeführt wird, daß der Abstand (Z') zwischen dem Tastkopf (4) und der Werkstückoberfläche im zulässigen Meßbereich des Triangulationstastkopfes (4) bleibt. Gleichzeitig wird in dieser Betriebsart die Intensität des vom Triangulationstaster emittierten Strahls (e) so geregelt, daß die über den Abbildungsstrahlengang (r) vom Detektor (8), einer Diodenzeile, oder einem CCD-Array, empfangene Lichtmenge pro Zeiteinheit konstant bleibt, unabhängig von den Streueigenschaften der Werkstückoberfläche.

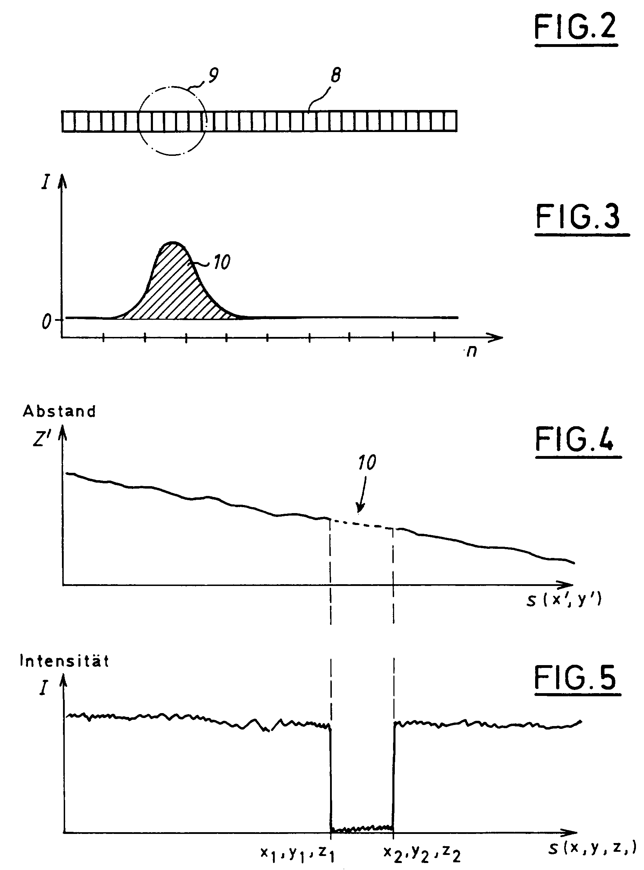

Das Abstandsmeßsignal (Z') des Triangulationstasters (4) ergibt sich durch Umrechnung der Lage des auf die Empfängerzeile (8) im Tastkopf (4) abgebildeten Strahlungsspots (9) (siehe Figur 2) nach bekannten trigonometrischen Zusammenhängen.

Dieses Verfahren der Formprüfung versagt dann, wenn über Kanten, tiefere Bohrungen, Löcher etc. hinweg gefahren wird, da an diesen Stellen der Abstandsmeßbereich des Tastkopfs (4) verlassen wird und eventuell auch keine Strahlung auf die Empfängerzeile (8) im Tastkopf zurückkommt. Andererseits ist es jedoch für viele Meßaufgaben wichtig, die genaue Lage der Kanten bzw. Bohrungen festzustellen.

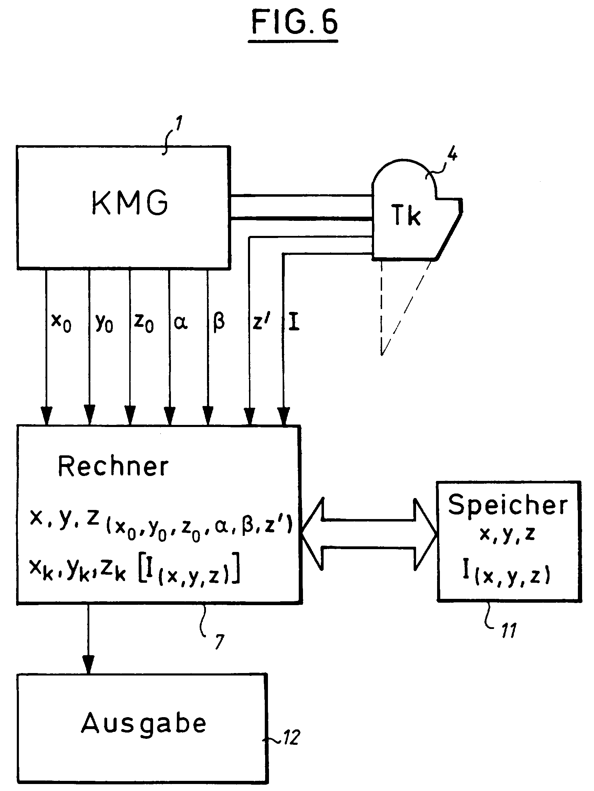

Zu diesem Zwecke wird in eine zweite Betriebsart umgeschaltet. Hier werden vor Beginn der Werkstückabtastung die Oberflächenstreueigenschaften des Werkstücks (5) in einem Teach-In-Vorgang automatisch ermittelt. Dabei fährt der Meßarm (3) verschiedene Punkte der Werkstückoberfläche an, es wird die bei vorgegebener emittierter Leistung rückgestreute Intensität gemessen und daraus eine angepaßte, mittlere Strahlungsintensität abgeleitet, auf die der Tastkopf (4) dann im nachfolgenden eigentlichen Meßvorgang konstant eingestellt wird. Anschließend wird, wie in Figur 1 beispielshaft dargestellt, über die Bohrungen (13) hinweg die Werkstückoberfläche abgefahren. Das vom Tastkopf abgegebene Abstandsmeßsignal (Z') wird zusammen mit den Positionssignalen (X₀, Y₀, Z₀), das aus den Maßstäben in den drei Achsen des Koordinatenmeßgerätes abgeleitet wird und den Winkelwerten α und β, die von den Encodern der Dreh-Schwenkeinheit geliefert werden, dem Rechner (7) des Koordinatenmeßgerätes zugeführt, der daraus die Koordinaten (X, Y, Z) berechnet. Dies ist aus dem vereinfachten Blockdiagramm nach Figur 6 ersichtlich.

Abstandsmeßwerte (Z'), die der Tastkopf (4) im Bereich der Bohrung (13) nicht liefert, werden durch Interpolation der vor und hinter der Bohrung (13) erhaltenen Abstandsmeßwerte (Z') generiert, wie das in Figur 3 durch die gestrichelte Fortsetzung der Abstandsmeßwerte im Bereich der Bohrung (13) angedeutet ist.

Gleichzeitig mit der Aufnahme der Abstandsmeßwerte (Z') werden in dieser Betriebsart die Intensitätsmeßwerte und zwar die integrale Gesamtintensität (10) der gesamten im Bereich des Spot (9) auf der Detektorzeile (8) auffallenden Strahlung (siehe Figur 3) gemessen und diese Intensitätsmeßwerte werden zusammen mit den Koordinaten (X, Y, Z) der abgescannten Werkstückoberfläche im Speicher (11) des Rechner (7) als Intensitäten I_{(X, Y, Z)} abgelegt. Rechnerintern entsteht somit die in Figur 5 skizzierte Darstellung der Intensitätswerte (I) über die Koordinaten (X, Y, Z), an denen sich die Strahlachse des Tastkopfs (4) mit der Werkstückoberfläche entlang des Abtastweges schneidet.

Es entsteht somit ein digitales, auf die Koordinaten bezogenes Intensitätssignal mit einer bedingt durch die Dynamik der Sensorzeile (8) und die Integralbildung sehr hohen Grauwertauflösung. Das im Bereich der Bohrung (13) sprunghaft absinkende Intensitätssignal wird dann im Rechner mit Hilfe an sich bekannter Kantenfilterungs- und Korrelationsverfahren im Ortsbereich ausgewertet und im Zuge dieser Auswertung die Koordinaten der Bohrungskante (X_{K}, Y_{K}, Z_{K}) aus den Intensitätsmeßwerten abgeleitet. Auf diese Weise können je nach vorgewählter Abtastgeschwindigkeit Kantenpositionen mit sehr hoher Genauigkeit dreidimensional gemessen werden, und zwar mit einer Genauigkeit, die weit unter dem Durchmesser des auf dem Werkstück entstehenden Strahlfleckes liegen.

Die so berechneten Kantenpositionen werden in der Ausgabeeinheit (12), beispielsweise einem Drucker protokolliert.

## Patentansprüche

1. Verfahren zur Detektion von Kanten und Bohrungen mit einem optischen Tastkopf (4), der ein Strahlbündel aussendet und ein aus der Lage bzw. der Form des auf einem Werkstück (5) entstehenden Strahlungsfleckes abgeleitetes, dem Abstand zum Werkstück entsprechendes Signal liefert, wobei
- der Tastkopf (4) am Meßarm (3) eines Koordinatenmeßgerätes befestigt ist und von diesem entlang eines vorgebbaren Weges (s) über die Oberfläche des zu vermessenden Werkstückes (5) geführt wird,
- die Koordinaten (X, Y, Z) der abgetasteten Werkstückoberfläche aus den Abstandsmeßwerten (Z') des optischen Tastkopfs und den Wegsignalen (X₀, Y₀, Z₀) des Koordinatenmeßgerätes ermittelt und gespeichert werden,
- zusätzlich die Intensität (I) der vom Werkstück (5) rückgesteuerten und vom Tastkopf (4) empfangenen Strahlung für die Koordinaten (X, Y, Z) ermittelt oder durch Regelung der Intensität der vom Tastkopf (4) emittierten Strahlung konstant gehalten wird,
- der Verlauf der Intensitätswerte (I) der empfangenen bzw. der im Falle der Regelung emittierten Strahlung gespeichert und über die gemessenen Koordinaten (X, Y, Z) in einem Rechner ausgewertet wird derart, daß die Lagekoordinaten (X_{K}, Y_{K}, Z_{K}) von Kanten bzw. Bohrungen aus sprunghaften Änderungen der Intensitätswerte (I) bestimmt werden.

2. Verfahren nach Anspruch 1, wobei die Intensität der vom optischen Tastkopf (4) emittierten Strahlung konstant gehalten und die Intensität der vom Tastkopf empfangenen Strahlung ermittelt wird.

3. Verfahren nach Anspruch 2, wobei die integrale Intensität (10) der vom Tastkopf (4) empfangenen Strahlung bestimmt und abgespeichert wird.

4. Verfahren nach Anspruch 1, wobei die Intensität der vom Tastkopf (4) emittierten Strahlung so geregelt wird, daß die Intensität der empfangenen Strahlung möglichst konstant ist, und die Intensität der emittierten Strahlung für die einzelnen Koordinaten abgespeichert wird.

5. Verfahren nach Anspruch 1, wobei das Abstandssignal des optischen Tastkopfes bzw. die daraus gewonnenen Koordinatenwerte im Bereich von Kanten und Bohrungen durch Glättung bzw. Interpolation gewonnen werden.

6. Einrichtung zur berührungslosen Detektion von Kanten und Bohrungen auf Werkstücken mit
- einem Koordinatenmeßgerät (1), das einen in drei Raumrichtungen positionierbaren Meßarm (3) besitzt, dessen Lage in den drei Raumrichtungen durch entsprechende Positionssignale (X₀, Y₀, Z₀) bestimmt ist,
- einem an dem Meßarm befestigten optischen Tastkopf (4), der im Verwendungsfall ein seinem Abstand zum Werkstück (5) entsprechendes Signal (Z') liefert,
- einem Rechner (7), der im Verwendungsfall aus den Positionssignalen (X₀, Y₀, Z₀) und dem Abstandssignal (Z') Koordinatenwerte (X, Y, Z) für Punkte auf den Werkstücken berechnet,
- eine Einrichtung (8) zur zusätzlichen Messung der Intensität der vom Werkstück (5) rückgestreuten Strahlung oder zur Messung und Regelung der Intensität der vom Tastkopf (4) emittierten Strahlung auf konstante Intensität der rückgestreuten Strahlung und einem Speicher (11), in dem im Verwendungsfall die gemessenen Intensitätswerte I_{(X, Y, Z)} abgelegt sind, sowie
- einem Auswerteprogramm, das die Koordinaten (X_{K}, Y_{K}, Z_{K}) der Kanten und Bohrungen aus den in Abhängigkeit von den Werkstückkoordinaten gespeicherten Intensitätswerten (I_{(X,} _{Y, Z)}) ermittelt.

7. Einrichtung nach Anspruch 6, wobei der Tastkopf (4) über eine Dreh-Schwenk-Einheit (14) am Meßarm (3) befestigt ist.

## Claims

1. A method of detecting edges and bores on a workpiece with an optical probe head (4) which emits an optical beam and supplies a signal corresponding to the distance to the workpiece, the signal being derived from the position or shape of the beam spot occurring on the workpiece (5), wherein
- the probe head (4) is attached to the measuring arm (3) of a coordinate measuring apparatus and is guided with the aid of the measuring arm along a pregiven path (s) over the surface of the workpiece (5) to be measured,
- the coordinates (x, y, z) of the scanned workpiece surface are determined from measured distance values (z') of the optical probe head and from the path signals (x₀, y₀, z₀) of the coordinate measuring apparatus and stored,
- the intensity (I) of the radiation being backscattered from the workpiece (5) and received by the probe head (4) is determined for the coordinates (x, y, z), or is held constant by controlling the intensity of the radiation emitted by the probe head (4),
- the trace of the intensity values I of the radiation received, or emitted in the case of controlled operation, is stored with respect of the measured coordinates (x, y, z) in a computer in such a manner that the position coordinates (xₖ, yₖ, zₖ) of edges and bores are determined from abrupt changes of the intensity values (I).

2. The method of claim 1, wherein the intensity of the radiation emitted by the optical probe head (4) is held constant and the intensity of radiation received by the probe head is determined.

3. The method of claim 2, wherein the integral intensity (10) of the radiation received by the probe head (4) is determined and stored.

4. The method of claim 1, wherein the intensity of the radiation emitted by the probe head (4) is controlled so that said intensity of the received radiation is as constant as possible and the intensity of the emitted radiation for the individual coordinates is stored.

5. The method of claim 1, wherein the distance signal of the optical probe head or the coordinate values obtained therefrom in the region of the edges and bores are evaluated by filtering or interpolation.

6. An arrangement for detecting edges and bores on a workpiece without mechanical contact with the workpiece, the arrangement comprising:
- a coordinate measuring apparatus (1) having a measuring arm (3), which can be positioned in three spatial directions, the position of which is determined by position signals (x₀, y₀, z₀),
- an optical probe head (4) mounted on said measuring arm and supplying a signal (z') corresponding to the distance from the workpiece (5), when in use,
- a computer (7) computing coordinate values (x, y, z) for points on the workpiece from said position signals (x₀, y₀, z₀) and the distance signal (z'), when in use,
- means (8) for measuring additionally the intensity of the radiation backscattered from the workpiece (5) or for measuring and controlling the intensity of the radiation emitted by said optical probe head (4) in order to keep said backscattered radiation constant, and a memory (11) for storing the measured intensity values I_{(x, y, z)}; and,
- an evaluation program for determining the coordinates (xₖ, yₖ, zₖ) of said edges and bores from said intensity values I_{(x, y, z)} stored in dependence upon the workpiece coordinates.

7. The arrangement of claim 6, wherein the probe head (4) is attached to said measuring arm by a rotation-pivot unit (14).

## Revendications

1. Procédé pour la détection d'arêtes et d'alésages à l'aide d'une tête de palpage optique (4) qui émet un faisceau lumineux et qui fournit un signal déduit de la position et de la forme de la tache lumineuse projetée sur une pièce à usiner (5) et renseignant sur la distance de ladite pièce à usiner, où
- la tête de palpage (4) est montée sur le bras de mesure (3) d'une machine de métrologie industrielle qui la guide le long d'un parcours prédéterminé au-dessus de la surface de la pièce (5),
- les coordonnées (X, Y, Z) de la surface balayée sont déduites des valeurs de distance (Z') de la tête de palpage optique et des signaux de course (X_{0,} Y_{0,} Z₀) de la machine de métrologie industrielle, puis mises en mémoire,
- l'intensité (I) du rayonnement réfléchi par la pièce (5) et capté par la tête de palpage optique (4) est en plus déterminée pour les coordonnées (X, Y, Z) ou maintenue constante par réglage de l'intensité du rayonnement émis par ladite tête de palpage (4),
- la séquence des valeurs d'intensité (I) du rayonnement capté, ou du rayonnement émis dans le cas du réglage d'intensité, est stockée et analysée par un ordinateur sur la base des coordonnées (X, Y, Z), de manière à ce que les coordonnées (X_{K}, Y_{K}, Z_{K}) identifiant des alésages ou des arêtes sont déterminées à partir de changements brusques des valeurs d'intensité (I).

2. Procédé selon la revendication 1, où l'intensité du rayonnement émis par la tête de palpage optique (4) est maintenue constante et où l'on détermine sur cette base l'intensité du rayonnement capté en retour par ladite tête de palpage.

3. Procédé selon la revendication 2, où l'on détermine et stocke l'intensité intégrale (10) du rayonnement capté en retour par la tête de palpage (4).

4. Procédé selon la revendication 1, où l'intensité du rayonnement émis par la tête de palpage optique (4) est réglée de manière à maintenir aussi constante que possible le rayonnement capté en retour et à mettre en mémoire l'intensité du rayonnement émis pour les différentes coordonnées.

5. Procédé selon la revendication 1, où le signal de distance fourni par la tête de palpage optique et les coordonnées qui en sont déduites sont obtenus par interpolation au niveau d'alésages et d'arêtes.

6. Dispositif pour la détection sans contact des alésages et arêtes de pièces à usiner, composé
- d'une machine de métrologie industrielle (1) dotée d'un bras de mesure (3) qui peut être positionné dans les trois axes et dont la position dans l'espace est déterminé par des signaux de position correspondants (X₀, Y₀, Z₀),
- d'une tête de palpage optique (4) fixée sur le bras de mesure, qui fournit un signal (Z') correspondant à sa distance de la pièce (5) à mesurer,
- d'un ordinateur (7) qui calcule les coordonnées (X, Y, Z) de points de la pièce à mesurer à partir des signaux de position (X₀, Y₀, Z₀) et du signal de distance (Z'),
- d'un dispositif (8) servant à mesurer l'intensité du rayonnement réfléchi par la pièce (5) ou à mesurer et régler l'intensité du rayonnement émis par la tête de palpage optique (4) de manière à maintenir constante le rayonnement réfléchi, ainsi que d'une mémoire (11), dans laquelle sont stockées les valeurs d'intensité relevées I_{(X,Y,Z)},
- d'un programme d'analyse qui détermine les coordonnées (X_{K}, Y_{K}, Z_{K}) des alésages et des arêtes à partir des valeurs d'intensité I_{(X,Y,Z)} stockées pour les coordonnées de points de la pièce à mesurer.

7. Dispositif selon la revendication 6, où la tête de palpage (4) est montée sur le bras de mesure (3) par l'intermédiaire d'un dispositif de rotation et de basculement (14).
